# EUROPEAN PATENT APPLICATION

(11) **EP 4 760 890 A1**
(43) Date of publication of application: **17.06.2026**
(21) Application number: 24868670.1
(22) Date of filing: 19.09.2024
(51) Int. Cl.: H01M 50/102, H01M 50/105, H01M 10/42

(54) **BATTERY CASE AND SECONDARY BATTERY INCLUDING SAME**

(30) Priority: 22.09.2023 KR 20230127466
(71) Applicant: LG Energy Solution, Ltd., Seoul 07335 (KR)
(72) Inventor: HAN, Hyun Gyu, Daejeon 34122 (KR)
(74) Representative: Plasseraud IP
(86) International application number: PCT/KR2024/014100
(87) International publication number: WO 2025/063693

(57) **Abstract**

A battery case according to an embodiment of the present disclosure may include an accommodation portion accommodating an electrode assembly including a positive electrode and a negative electrode stacked in an alternating manner with a separator interposed between the positive electrode and the negative electrode, wherein an edge portion of the negative electrode is protruded outwards than the positive electrode. A bottom surface of the accommodation portion may include a main area; and a peripheral area located around the main area, wherein the peripheral area forms a predetermined step with the main area, and overlaps the edge portion of the negative electrode in a stack direction of the electrode assembly.

## Description

### TECHNICAL FIELD

### CROSS-REFERENCE TO RELATED APPLICATIONS

The present application claims priority to Korean Patent Application No. 10-2023-0127466 filed on September 22, 2023 in the Republic of Korea, the disclosure of which is incorporated herein by reference.

### TECHNICAL FIELD

The present disclosure relates to a battery case accommodating an electrode assembly including a positive electrode and a larger negative electrode than the positive electrode, and a secondary battery including the electrode assembly and the battery case.

### BACKGROUND ART

In general, the types of secondary batteries include nickel cadmium batteries, nickel hydrogen batteries, lithium-ion batteries and lithium-ion polymer batteries. Secondary batteries are used in not only small products such as digital cameras, P-DVD, MP3P, mobile phones, PDA, Portable Game Device, Power Tool and E-bike, but also large products requiring high output such as electric vehicles or hybrid electric vehicles and energy storage systems that store surplus power or new renewable energy and energy storage systems for backup.

To manufacture a secondary battery, first, an electrode active material slurry is applied to a positive current collector and a negative current collector to manufacture a positive electrode and a negative electrode, and the positive electrode and the negative electrode are stacked on both sides of a separator to form an electrode assembly of a predetermined shape. Additionally, the electrode assembly is received in a battery case, followed by electrolyte injection and sealing.

Secondary batteries are classified into a pouch type and a can type according to the material of the case accommodating the electrode assembly. The pouch type accommodates the electrode assembly in the pouch made of a flexible polymer material. Additionally, the can type accommodates the electrode assembly in the case made of a metal or plastic material.

In general, the pouch-type battery case is manufactured by pressing a pouch film having flexibility to form an accommodation portion of a cup shape. Additionally, when the accommodation portion is formed, the electrode assembly is received in the accommodation portion and side sealing is carried out to manufacture a secondary battery.

The pouch-type battery case is formed, taking into account insertion in accordance with the thickness of the electrode assembly. However, there is a size difference between the positive electrode and the negative electrode included in the electrode assembly. More specifically, generally, the negative electrode is larger than the positive electrode. Due to the size difference, a small thickness difference occurs between a central portion and an edge portion of the electrode assembly.

Conventionally, the accommodation portion of the pouch-type battery case was formed with a uniform depth without considering the thickness difference, and an empty space was created in the accommodation portion, causing problems with safety such as lithium plating or electrode slippage.

### SUMMARY

### TECHNICAL PROBLEM

The present disclosure is directed to providing a battery case and a secondary battery in which an empty space in an accommodation portion is minimized by compensating for a thickness difference of an electrode assembly caused by a size difference of a positive electrode and a negative electrode.

### TECHNICAL SOLUTION

A battery case according to an embodiment of the present disclosure may include an accommodation portion accommodating an electrode assembly including a positive electrode and a negative electrode stacked in an alternating manner with a separator interposed between the positive electrode and the negative electrode, wherein an edge portion of the negative electrode is protruded outwards than the positive electrode. A bottom surface of the accommodation portion may include a main area; and a peripheral area located around the main area, wherein the peripheral area forms a predetermined step with the main area and overlaps the edge portion of the negative electrode in a stack direction of the electrode assembly.

The battery case may further include a terrace portion connected to a peripheral surface of the accommodation portion. On the basis of the terrace portion, a depth of the main area may be larger than a depth of the peripheral area.

The accommodation portion may include a first accommodation portion and a second accommodation portion facing each other. The bottom surface of each of the first accommodation portion and the second accommodation portion may include the main area and the peripheral area.

The peripheral area may have a closed loop shape.

A secondary battery according to an embodiment of the present disclosure may include an electrode assembly including a positive electrode and a negative electrode stacked in an alternating manner with a separator interposed between the positive electrode and the negative electrode, wherein an edge portion of the negative electrode is protruded outwards than the positive electrode; and a battery case having an accommodation portion accommodating the electrode assembly. A bottom surface of the accommodation portion may include a main area; and a peripheral area located around the main area, wherein the peripheral area forms a predetermined step with the main area and overlaps the edge portion of the negative electrode in a stack direction of the electrode assembly.

A width of the peripheral area may correspond to a width of the edge portion of the negative electrode.

The step between the main area and the peripheral area may correspond to half of a total thickness of the positive electrode included in the electrode assembly.

The peripheral area may include a tab region extended parallel to a side of the negative electrode where a negative tab is protruded; and a side region extended in a direction perpendicular to the tab region and having a smaller width than the tab region.

A secondary battery according to an embodiment of the present disclosure may include an electrode assembly including a positive electrode and a negative electrode stacked in an alternating manner with a separator interposed between the positive electrode and the negative electrode, wherein an edge portion of the negative electrode is protruded outwards than the positive electrode; a battery case having an accommodation portion accommodating the electrode assembly; and a pad disposed on at least one side in a stack direction of the electrode assembly inside the accommodation portion. The pad may include a support portion having a predetermined thickness and overlapping the edge portion of the negative electrode in the stack direction of the electrode assembly.

A width of the support portion may correspond to a width of the edge portion of the negative electrode.

The support portion may have a closed loop shape.

A thickness of the support portion may correspond to a total thickness of a plurality of the positive electrodes included in the electrode assembly.

The pad may further include a cover portion located at an inner side than the support portion and having a smaller thickness than the support portion.

A difference between the thickness of the cover portion and the thickness of the support portion may correspond to a total thickness of a plurality of the positive electrodes included in the electrode assembly.

The pad may contact an inside of a bottom surface of the accommodation portion.

The accommodation portion may include a first accommodation portion and a second accommodation portion facing each other. The pad may include a first pad disposed on a side in the stack direction of the electrode assembly and located in the first accommodation portion; and a second pad disposed on an another side in the stack direction of the electrode assembly and located in the second accommodation portion.

The support portion may include a tab region extended parallel to a side of the negative electrode where a negative tab is protruded; and a side region extended in a direction perpendicular to the tab region and having a smaller width than the tab region.

### ADVANTAGEOUS EFFECTS

According to an exemplary embodiment of the present disclosure, it may be possible to minimize the empty space in the accommodation portion formed by the smaller thickness of the edge portion of the electrode assembly, and solve the problem such as lithium plating or electrode slippage that may occur in the electrode assembly by the empty space.

Besides, the effects of the present disclosure may include effects that can be easily predicted by those skilled in the art from the exemplary embodiments of the present disclosure.

### BRIEF DESCRIPTION OF THE DRAWINGS

The accompanying drawings illustrate the exemplary embodiments of the present disclosure and together with the following detailed description, serve to provide a better understanding of the technical aspect of the present disclosure, and thus the present disclosure should not be construed as being limited to the drawings.
FIG. 1 is an exploded perspective view of a secondary battery according to an embodiment of the present disclosure.
FIG. 2 is a schematic diagram of an electrode assembly shown in FIG. 1.
FIG. 3 is a side view of a secondary battery according to an embodiment of the present disclosure.
FIG. 4 is an enlarged cross-sectional view showing the inner parts of a secondary battery according to an embodiment of the present disclosure, especially near a peripheral area of a bottom surface of an accommodation portion.
FIG. 5 is a plan view of a secondary battery according to an embodiment of the present disclosure.
FIG. 6 is a plan view of an electrode assembly shown in FIG. 1.
FIG. 7 is an exploded perspective view of a secondary battery according to another embodiment of the present disclosure.
FIG. 8 is an enlarged cross-sectional view showing the inner parts of a secondary battery according to another embodiment of the present disclosure, especially near a support portion of a pad.
FIG. 9 is a plan view of a pad shown in FIG. 7.

### DETAILED DESCRIPTION

Hereinafter, the exemplary embodiments of the present disclosure will be described in sufficient detail with reference to the accompanying drawings to enable persons having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the specification.

Additionally, the terms or words used in the specification and the appended claims should not be construed as limited to general and dictionary meanings, but rather interpreted based on the meanings and concepts corresponding to the technical aspect of the present disclosure on the basis of the principle that the inventor is allowed to define the terms appropriately for the best explanation.

Each component of a secondary battery according to an embodiment of the present disclosure is schematically shown in the drawings, and the size of components or the thickness of lines may be exaggerated for convenience of understanding.

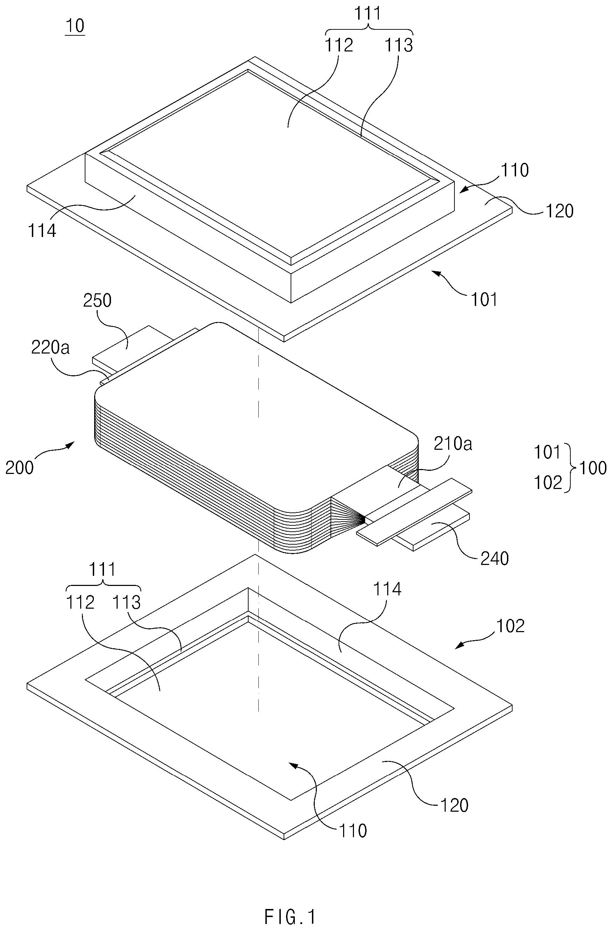

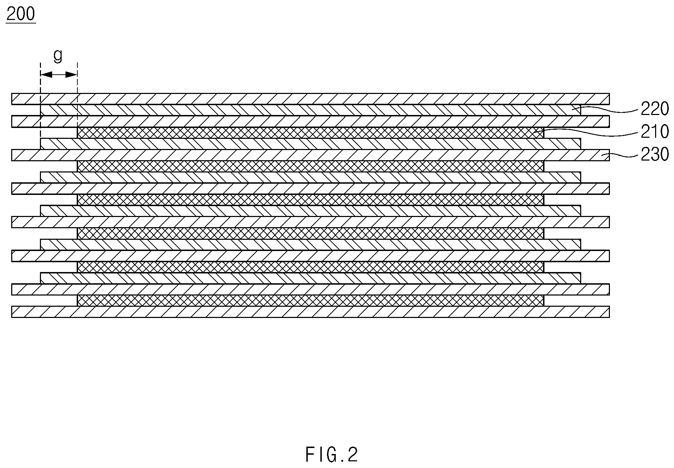

FIG. 1 is an exploded perspective view of a secondary battery according to an embodiment of the present disclosure, and FIG. 2 is a schematic diagram of an electrode assembly shown in FIG. 1.

The secondary battery 10 according to an embodiment of the present disclosure may include a battery case 100 and the electrode assembly 200.

The battery case 100 may be a pouch-type battery case. The battery case 100 may include an accommodation portion 110. More specifically, the battery case 100 may be manufactured by sealing a first case 101 and a second case 102 together, and the accommodation portion 110 may be formed in at least one of the first case 101 or the second case 102.

As shown in FIG. 1, when the accommodation portion 110 is formed in each of the first case 101 and the second case 102, the battery case 100 may include a pair of accommodation portions 110. According to need, the accommodation portion 110 of the first case 101 may be referred to as a first accommodation portion, and the accommodation portion 110 of the second case 102 may be referred to as a second accommodation portion. The pair of accommodation portions 110 may face each other and define an accommodation space for accommodating the electrode assembly 200 together. The pair of accommodation portions 110 may be formed with equal depth or different depths. The sum of depths of the pair of accommodation portions 110 may be approximately equal or similar to the thickness of the electrode assembly 200.

In contrast, when the accommodation portion 110 is formed in any one of the first case 101 and the second case 102, the battery case 100 may include a single accommodation portion 110. The accommodation portion 110 may define the accommodation space for accommodating the electrode assembly 200 singly. The depth of the accommodation portion may be approximately equal or similar to the thickness of the electrode assembly 200.

Each accommodation portion 110 may include a bottom surface 111 and a peripheral surface 114. The bottom surface 111 of the accommodation portion 110 may face the electrode assembly 200 in the thickness direction. The peripheral surface 114 of the accommodation portion 110 may surround the periphery of the electrode assembly 200.

The detailed description of the bottom surface 111 of the accommodation portion 110 will be provided below.

The battery case 100 may further include a terrace portion 120 connected to the peripheral surface 114 of the accommodation portion 110. The terrace portion 120 may be formed approximately parallel to the bottom surface 111 of the accommodation portion 110.

As an example, when the accommodation portion 110 is formed in each of the first case 101 and the second case 102, each of the first case 101 and the second case 102 may include the terrace portion 120. The terrace portion 120 of the first case 101 and the terrace portion 120 of the second case 102 may be sealed in contact with each other, and accordingly the electrode assembly 200 may be hermetically sealed in the battery case 100.

As another example, when the accommodation portion 110 is formed in only the first case 101, the first case 101 may include the terrace portion 120. Additionally, the second case 102 may have a flat plate shape. The terrace portion 120 of the first case 101 and the second case 102 may be sealed in contact with each other, and accordingly the electrode assembly 200 may be hermetically sealed in the battery case 100.

As shown in FIG. 1, the first case 101 and the second case 102 may be separated members. In this case, in a state that the first case 101 and the second case 102 are brought into contact such that facing each other, they may be sealed on four sides.

However, the present disclosure is not limited thereto, and the first case 101 and the second case 102 may be connected to each other such that sharing one side. In this case, when the said side is folded, the first case 101 and the second case 102 may be brought into contact such that facing each other, and in this state, they may be sealed on the remaining three sides except for the one side.

Meanwhile, the electrode assembly 200 may be formed by stacking a positive electrode 210 and a negative electrode 220 in an alternating manner with a separator 230 interposed between them. That is, the electrode assembly 200 may include the positive electrode 210, the negative electrode 220 and the separator 230. The electrode assembly 200 may come in various types, for example, a stack type, a winding type, a stack and fold type, etc. This is well known in the art and its description is omitted.

The electrodes 210, 220 may have electrode tabs 210a, 220a, respectively. The electrode tabs 210a, 220a may be connected to the electrodes 210, 220 and protruded outwards.

More specifically, each positive electrode 210 may have the positive tab 210a, and each negative electrode 220 may have the negative tab 220a. The positive tabs 210a of the plurality of positive electrodes 210 may be welded together. The negative tabs 220a of the plurality of negative electrodes 220 may be welded together.

As shown in FIG. 1, the positive tab 210a and the negative tab 220a may be protruded in different directions with respect to the electrode assembly 200. However, the present disclosure is not limited thereto, and the positive tab 210a and the negative tab 220a may be protruded side by side in the same direction.

Electrode leads 240, 250 may be connected to the electrode tabs 210a, 220a. One end of the electrode leads 240, 250 may be connected to the electrode tabs 210a, 220a and the other end may be protruded outward from the battery case 100. Together with the electrode tabs 210a, 220a, the electrode leads 240, 250 may act as a path of movement of electrons between the inside and outside of the electrode assembly 200.

More specifically, the positive lead 240 may be connected to the positive tab 210a, and the negative lead 250 may be connected to the negative tab 220a. The positive lead 240 may be connected to the part in which the plurality of positive tabs 210a are welded. The negative lead 250 may be connected to the part in which the plurality of negative tabs 220a are welded.

A part of each electrode lead 240, 250 may be surrounded by an insulation member such as an insulation tape. The insulation member may be located between the first case 101 and the second case 102, and in this state, the first case 101 and the second case 102 may be sealed together. In this case, a part of the inner surface of the first case 101 and the second case 102 may be sealed to the insulation member. Accordingly, the insulation member may prevent an electric current from flowing to the battery case 100 through the electrode leads 240, 250, and maintain the sealing of the battery case 100.

Meanwhile, the negative electrode 220 generally has a larger size than the positive electrode 210. That is, an edge portion of the negative electrode 220 may be protruded outwards than the positive electrode 210. The extent to which the negative electrode 220 is further protruded than the positive electrode 210 may be defined as the width g of the edge portion of the negative electrode 220.

By the size difference of the positive electrode 210 and the negative electrode 220, the electrode assembly 200 may be thicker at the edge portion than at the central portion. The central portion of the electrode assembly 200 may be where the positive electrode 210, the negative electrode 220 and the separator 230 are stacked, and the edge portion of the electrode assembly 200 may be where the edge portion of the negative electrode 220 and the separator 230 are stacked.

More specifically, the thickness of the central portion of the electrode assembly 200 may correspond to the total thickness of the positive electrode 210, the negative electrode 220 and the separator 230. In contrast, the thickness of the edge portion of the electrode assembly 200 may correspond to the total thickness of the negative electrode 220 and the separator 230. That is, there may be a difference between the thickness of the central portion of the electrode assembly 200 and the thickness of the edge portion of the electrode assembly 220 by the total thickness of the positive electrode 210.

The thickness difference of the central portion and the edge portion of the electrode assembly 200 may change depending on the thickness of each positive electrode 210 and the number of stacked positive electrodes 210.

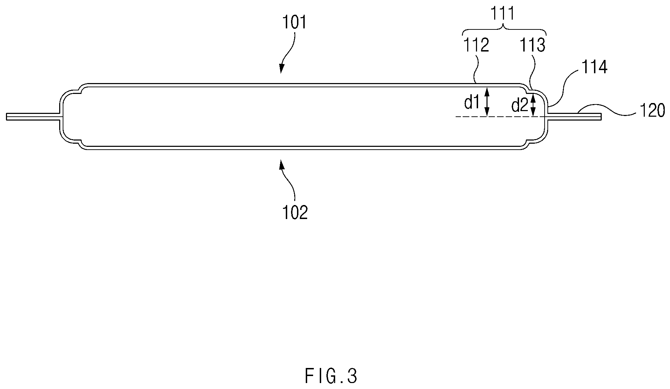

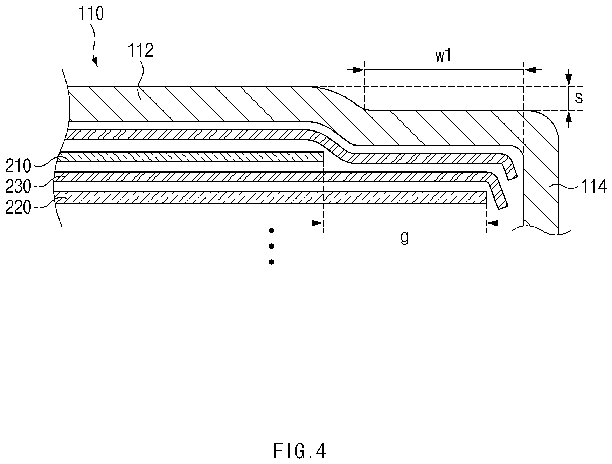

FIG. 3 is a side view of the secondary battery according to an embodiment of the present disclosure, and FIG. 4 is an enlarged cross-sectional view showing the inner parts of the secondary battery according to an embodiment of the present disclosure, especially near a peripheral area of the bottom surface of the accommodation portion. To help understanding, although FIG. 4 shows the positive electrode 210, the negative electrode 220 and the separator 230 spaced apart from one another a little bit, those skilled in the art will easily understand that the positive electrode 210, the negative electrode 220 and the separator 230 are actually stacked on one another.

To compensate for the thickness difference between the central portion and the edge portion of the electrode assembly 200, the accommodation portion 110 of the battery case 100 may include a main area 112 and the peripheral area 113 formed with different depths.

More specifically, the bottom surface 111 of the accommodation portion 110 may include the main area 112 and the peripheral area 113 located around the main area 112 and forming a predetermined step with the main area 112.

The peripheral area 113 may have a closed loop shape. The peripheral area 113 may surround the main area 112. The peripheral area 113 may be connected to the peripheral surface 114 of the accommodation portion 110.

The peripheral area 113 may overlap the edge portion of the negative electrode 220 in the stack direction of the electrode assembly 200. The width W1 of the peripheral area 113 may correspond to the width g of the edge portion of the negative electrode 220. In the specification, corresponding may refer to equal or similar.

On the basis of the terrace portion 120, the depth d1 of the main area 112 may be larger than the depth d2 of the peripheral area 113. The step S between the main area 112 and the peripheral area 113 may refer to a difference between the depth d1 of the main area 112 and the depth d2 of the peripheral area 113.

When the battery case 100 includes the pair of accommodation portions 110, the bottom surface 111 of each accommodation portion 110 may include the main area 112 and the peripheral area 113. In this case, the step S between the main area 112 and the peripheral area 113 may correspond to approximately half of the thickness difference between the central portion and the edge portion of the electrode assembly 200. That is, the step S between the main area 112 and the peripheral area 113 may correspond to approximately half of the total thickness of the plurality of positive electrodes 210 included in the electrode assembly 200. For example, the step S may be from 0.1 mm to 1 mm.

By the peripheral area 113 of the accommodation portion 110, the empty space in the accommodation portion 110 formed by the smaller thickness of the edge portion of the electrode assembly 200 may be minimized, and the problem such as lithium plating or electrode slippage that may occur in the electrode assembly 200 by the empty space may be solved.

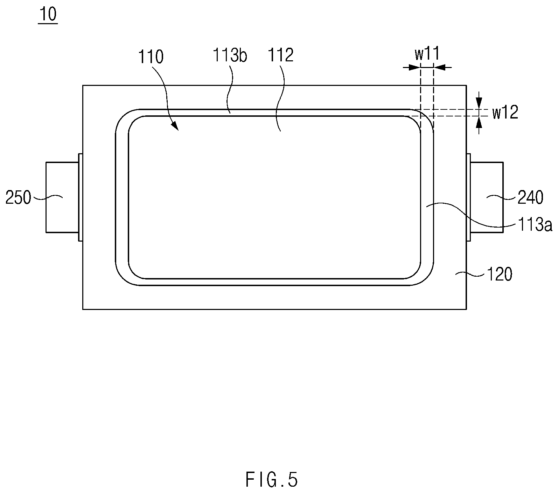

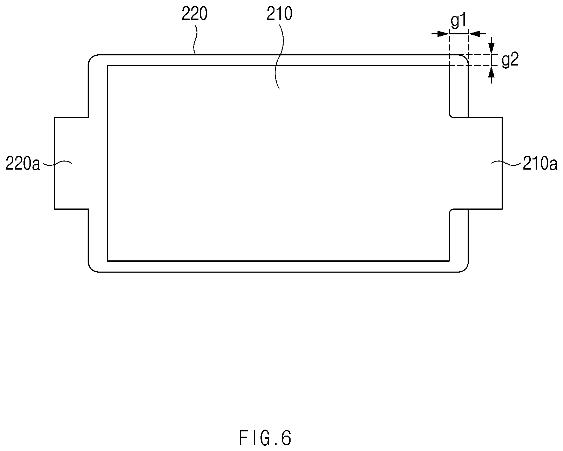

FIG. 5 is a plan view of the secondary battery according to an embodiment of the present disclosure, and FIG. 6 is a plan view of the electrode assembly shown in FIG. 1. To help understanding, in FIG. 6, illustration of the separator 230 is omitted.

In the electrode assembly 200, the width g of the edge portion of the negative electrode 220 is not constant along the periphery of the negative electrode 220, and may be different depending on locations. In relation to this, for stability of the electrode assembly 200, it is general that the size difference of the negative electrode 220 and the positive electrode 210 is larger at the tab.

More specifically, the negative electrode 200 may include a first side where the negative tab 220a is protruded, a second side parallel to the first side, and a third side and a fourth side perpendicular to the first and second sides. Additionally, the second side may be adjacent to the side of the positive electrode 210 where the positive tab 210a is protruded. In this case, the width g1 of the edge portion of the first side and the second side may be larger than the width g2 of the edge portion of the third side and the fourth side.

For example, as shown in FIG. 6, the negative tab 220a may be protruded from the short side of the negative electrode 220, and the positive tab 210a may be protruded from the short side of the positive electrode 210 in the opposite direction to the negative tab 220a. In this case, the width g1 of the edge portion of two short sides of the negative electrode 220 may be larger than the width g2 of the edge portion of two long sides of the negative electrode 220.

To correspond to the width g1, g2 of the edge portion of the negative electrode 220, the peripheral area 113 of the accommodation portion 110 of the battery case 100 may include a tab region 113a and a side region 113b having a smaller width than the tab region 113a.

The tab region 113a may be extended parallel to the side of the negative electrode 220 where the negative tab 220a is protruded. The side region 113b may be extended in a direction perpendicular to the tab region 113a. More specifically, the tab region 113a may include a pair of tab regions parallel to the first side and the second side of the negative electrode 220. The side region 113b may include a pair of side regions parallel to the third side and the fourth side of the negative electrode 220.

Each tab region 113a may overlap the edge portion of the first side or the second side of the negative electrode 220 in the stack direction of the electrode assembly 200. Each side region 113b may overlap the edge portion of the third side or the fourth side of the negative electrode 220 in the stack direction of the electrode assembly 200.

The width W11 of the tab region 113a may be larger than the width W12 of the side region 113b.

The width W11 of the tab region 113a may correspond to the width g1 of the edge portion of the first side or the second side of the negative electrode 220. The width W12 of the side region 113b may correspond to the width g2 of the edge portion of the third side or the fourth side of the negative electrode 220.

For example, the width W11 of the tab region 113a may be from 1 mm to 3 mm, and the width W12 of the side region 113b may be from 1 mm to 2 mm. Additionally, the width W11 of the tab region 113a may be 1 mm to 1.5 mm larger than the width W12 of the side region 113b.

Accordingly, the peripheral area 113 of the accommodation portion 110 may be optimized to the shape of the edge portion of the electrode assembly 200, and the empty space in the accommodation portion 110 may be minimized.

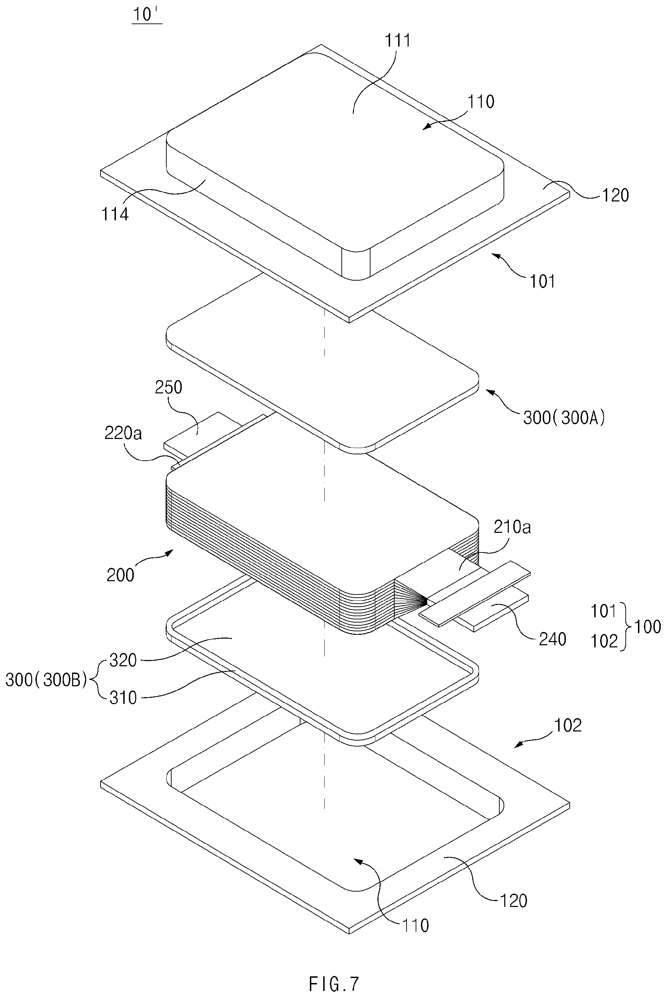

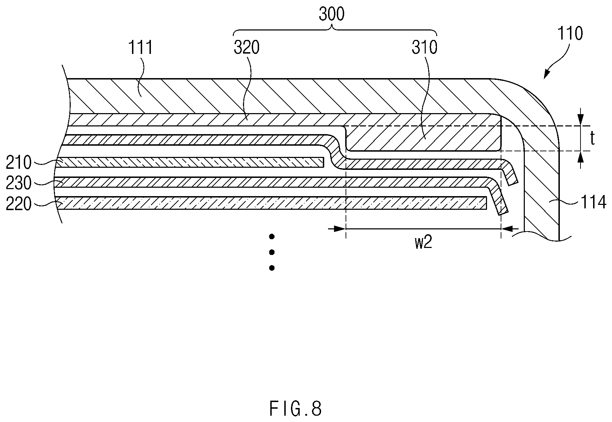

FIG. 7 is an exploded perspective view of the secondary battery according to another embodiment of the present disclosure, and FIG. 8 is an enlarged cross-sectional view showing the inner parts of the secondary battery according to another embodiment of the present disclosure, especially near a support portion of a pad. To help understanding, although FIG. 8 shows the positive electrode 210, the negative electrode 220 and the separator 230 spaced apart from one another a little bit, those skilled in the art will easily understand that the positive electrode 210, the negative electrode 220 and the separator 230 are actually stacked on one another.

Hereinafter, the overlapping description with the foregoing description is omitted and differences will be described.

The secondary battery 10' according to another embodiment of the present disclosure may further include the pad 300, instead of forming the accommodation portion 110 of the battery case 100 with a constant depth without a step. That is, to compensate for the thickness difference between the central portion and the edge portion of the electrode assembly 200, the secondary battery 10' may further include the pad 300.

The pad 300 may be disposed on at least one side in the stack direction of the electrode assembly 200 inside the accommodation portion 110. More specifically, the pad 300 may be disposed between the bottom surface 111 of the accommodation portion 110 and the edge portion of the electrode assembly 200. The pad 300 may contact the inside of the bottom surface 111 of the accommodation portion 110.

The pad 300 may be made of a material that is nonreactive with the electrolyte injected into the accommodation portion 110. The pad 300 may elastically deform by external forces to be able to respond to a predetermined level of thickness change. For example, the pad 300 may be a sponge or foam pad type. Additionally, the pad 300 may absorb surplus electrolyte in the accommodation portion 110 or prevent the transfer of external impacts to the electrode assembly 200.

When the accommodation portion 110 is formed in each of the first case 101 and the second case 102, the pad 300 may include a pair of pads. More specifically, the pair of pads 300 may include a first pad 300A disposed on one side in the stack direction of the electrode assembly 200, and a second pad 300B disposed on the other side in the stack direction of the electrode assembly 200. The first pad 300A may be located in the accommodation portion 110 of the first case 101, and the second pad 300B may be located in the accommodation portion 110 of the second case 102.

Each pad 300 may include the support portion 310 that overlaps the edge portion of the negative electrode 220 in the stack direction of the electrode assembly 200. The pad 300 may further include a cover portion 320 located at the inner side than the support portion 310 and having a smaller thickness than the support portion 310.

The cover portion 320 may be in the form of a thin film or sheet. The cover portion 320 may cover the electrode assembly 200.

The support portion 310 may have a closed loop shape. The support portion 310 may be protruded from the cover portion 320 toward the electrode assembly 200. The support portion 310 may be attached to the cover portion 320. However, the present disclosure is not limited thereto, and the support portion 310 and the cover portion 320 may be integrally formed.

The outer periphery of the support portion 310 may face the inner periphery of the accommodation portion 110. The support portion 310 may have a predetermined thickness.

The support portion 310 may overlap the edge portion of the negative electrode 220 in the stack direction of the electrode assembly 200. The width W2 of the support portion 310 may correspond to the width g of the edge portion of the negative electrode 220 (see FIG. 4).

The thickness of the support portion 310 may be larger than the thickness of the cover portion 320. When the battery case 100 includes the pair of accommodation portions 110, in each of the first pad 300A and the second pad 300B, the thickness difference (t) of the support portion 310 and the cover portion 320 may correspond to approximately half of the thickness difference between the central portion and the edge portion of the electrode assembly 200. The thickness difference (t) of the support portion 310 and the cover portion 320 may correspond to half of the total thickness of the plurality of positive electrodes 210 included in the electrode assembly 200. For example, the thickness difference (t) may be from 0.1 mm to 1 mm.

However, the present disclosure is not limited thereto, and the pad 300 may include only the support portion 310 without the cover portion 320. That is, the pad 300 may have a closed loop shape. In this case, the thickness of the support portion 310 of each of the first pad 300A and the second pad 300B may correspond to approximately half of the thickness difference between the central portion and the edge portion of the electrode assembly 200. The thickness of the support portion 310 may correspond to half of the total thickness of the plurality of positive electrodes 210 included in the electrode assembly 200.

By the support portion 310 of the pad 300, the empty space in the accommodation portion 110 formed by the smaller thickness of the edge portion of the electrode assembly 200 may be minimized, and the problem such as lithium plating or electrode slippage that may occur in the electrode assembly 200 by the empty space may be solved.

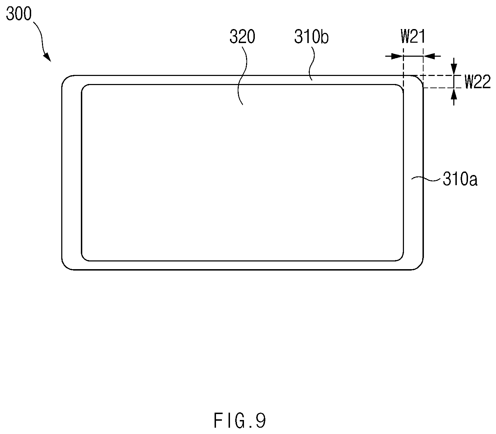

FIG. 9 is a plan view of the pad shown in FIG. 7.

To correspond to the width g1, g2 of the edge portion of the negative electrode 220 described above (see FIG. 6), the support portion 310 of the pad 300 may include a tab region 310a and a side region 310b having a smaller width than the tab region 310a.

The tab region 310a may be extended parallel to the side of the negative electrode 220 where the negative tab 220a is protruded. The side region 310b may be extended in the direction perpendicular to the tab region 310a. More specifically, the tab region 310a may include a pair of tab regions parallel to the first side and the second side of the negative electrode 220. The side region 310b may include a pair of side regions parallel to the third side and the fourth side of the negative electrode 220.

Each tab region 310a may overlap the edge portion of the first side or the second side of the negative electrode 220 in the stack direction of the electrode assembly 200. Each side region 310b may overlap the edge portion of the third side or the fourth side of the negative electrode 220 in the stack direction of the electrode assembly 200.

The width W21 of the tab region 310a may be larger than the width W22 of the side region 310b.

The width W21 of the tab region 310a may correspond to the width g1 of the edge portion of the first side or the second side of the negative electrode 220 (see FIG. 6). The width W22 of the side region 310b may correspond to the width g2 of the edge portion of the third side or the fourth side of the negative electrode 220.

For example, the width W21 of the tab region 310a may be from 1 mm to 3 mm, and the width W22 of the side region 310b may be from 1 mm to 2 mm. Additionally, the width W21 of the tab region 310a may be 1 mm to 1.5 mm larger than the width W22 of the side region 310b.

Accordingly, the peripheral area 113 of the accommodation portion 110 may be optimized to the shape of the edge portion of the electrode assembly 200, and the empty space in the accommodation portion 110 may be minimized.

The foregoing description has been made to describe the technical aspect of the present disclosure by way of example, and persons having ordinary skill in the technical field pertaining to the present disclosure would have made a variety of modifications and changes without departing from the essential features of the present disclosure.

Therefore, the disclosed embodiments are provided to describe the technical aspect of the present disclosure and not intended to be limiting, and the technical scope of the present disclosure is not limited by these embodiments.

The scope of protection of the present disclosure should be interpreted by the appended claims, and it should be interpreted that all the technical spirit within the equivalent scope is included in the scope of protection of the present disclosure.

### [LIST OF REFERENCE NUMERALS]

| | | | |
|---|---|---|---|
| 10: | Secondary battery | 100: | Battery case |
| 110: | Accommodation portion (of accommodation portion) | 111: | Bottom surface |
| 112: | Main area | 113: | Peripheral area |
| 113a: | Tab region | 113b: | Side region |
| 114: | Peripheral surface (of accommodation portion) | | |
| 120: | Terrace portion | | |
| 200: | Electrode assembly | 210: | Positive electrode |
| 210a: | Positive tab | 220: | Negative electrode |
| 220a: | Negative tab | 230: | Separator |
| 240: | Positive lead | 250: | Negative lead |
| 300: | Pad | 310: | Support portion |
| 310a: | Tab region | 310b: | Side region |
| 320: | Cover portion | | |

## Claims

1. A battery case comprising:
an accommodation portion accommodating an electrode assembly including a positive electrode and a negative electrode stacked in an alternating manner with a separator interposed between the positive electrode and the negative electrode, wherein an edge portion of the negative electrode is protruded outwards than the positive electrode,
wherein a bottom surface of the accommodation portion includes:
a main area; and
a peripheral area located around the main area, wherein the peripheral area forms a predetermined step with the main area, and overlaps the edge portion of the negative electrode in a stack direction of the electrode assembly.

2. The battery case according to claim 1, further comprising:
a terrace portion connected to a peripheral surface of the accommodation portion,
wherein on the basis of the terrace portion, a depth of the main area is larger than a depth of the peripheral area.

3. The battery case according to claim 1,
wherein the accommodation portion includes a first accommodation portion and a second accommodation portion facing each other, and
wherein the bottom surface of each of the first accommodation portion and the second accommodation portion includes the main area and a peripheral area.

4. The battery case according to claim 1,
wherein the peripheral area has a closed loop shape.

5. A secondary battery comprising:
an electrode assembly including a positive electrode and a negative electrode stacked in an alternating manner with a separator interposed between the positive electrode and the negative electrode, wherein an edge portion of the negative electrode is protruded outwards than the positive electrode; and
a battery case having an accommodation portion accommodating the electrode assembly,
wherein a bottom surface of the accommodation portion includes:
a main area; and
a peripheral area located around the main area, wherein the peripheral area forms a predetermined step with the main area, and overlaps the edge portion of the negative electrode in a stack direction of the electrode assembly.

6. The secondary battery according to claim 5,
wherein a width of the peripheral area corresponds to a width of the edge portion of the negative electrode.

7. The secondary battery according to claim 5,
wherein a step between the main area and the peripheral area corresponds to half of a total thickness of the positive electrode included in the electrode assembly.

8. The secondary battery according to claim 5,
wherein the peripheral area includes:
a tab region extended parallel to a side of the negative electrode where a negative tab is protruded; and
a side region extended in a direction perpendicular to the tab region and having a smaller width than the tab region.

9. A secondary battery comprising:
an electrode assembly including a positive electrode and a negative electrode stacked in an alternating manner with a separator interposed between the positive electrode and the negative electrode, wherein an edge portion of the negative electrode is protruded outwards than the positive electrode;
a battery case having an accommodation portion accommodating the electrode assembly; and
a pad disposed on at least one side in a stack direction of the electrode assembly inside the accommodation portion,
wherein the pad includes:
a support portion having a predetermined thickness, and overlapping the edge portion of the negative electrode in a stack direction of the electrode assembly.

10. The secondary battery according to claim 9,
wherein a width of the support portion corresponds to a width of the edge portion of the negative electrode.

11. The secondary battery according to claim 9,
wherein the support portion has a closed loop shape.

12. The secondary battery according to claim 9,
wherein a thickness of the support portion corresponds to a total thickness of a plurality of the positive electrodes included in the electrode assembly.

13. The secondary battery according to claim 9,
wherein the pad further includes:
a cover portion located at an inner side than the support portion and having a smaller thickness than the support portion.

14. The secondary battery according to claim 13,
wherein a difference between a thickness of the cover portion and a thickness of the support portion corresponds to a total thickness of a plurality of the positive electrodes included in the electrode assembly.

15. The secondary battery according to claim 9,
wherein the pad contacts an inside of a bottom surface of the accommodation portion.

16. The secondary battery according to claim 9,
wherein the accommodation portion includes a first accommodation portion and a second accommodation portion facing each other, and
wherein the pad includes:
a first pad disposed on a side in a stack direction of the electrode assembly and located in the first accommodation portion; and
a second pad disposed on an another side in a stack direction of the electrode assembly and located in the second accommodation portion.

17. The secondary battery according to claim 9,
wherein the support portion includes:
a tab region extended parallel to a side of the negative electrode where a negative tab is protruded; and
a side region extended in a direction perpendicular to the tab region and having a smaller width than the tab region.
